# EUROPÄISCHE PATENTANMELDUNG

(11) **EP 2 072 687 A1**
(43) Veröffentlichungstag der Anmeldung: **24.06.2009**
(21) Anmeldenummer: 08172172.2
(22) Anmeldetag: 18.12.2008
(51) Int. Cl.: E02D 17/20, A01G 1/00, E02B 3/12

(54) **Verfahren zur Erhöhung der Lagesicherheit von natürlich anstehenden oder geschütteten Bodenmassen durch Einführung von Verfestigungselementen, vorzugsweise vegetativen Verfestigungselementen, und Anordnung zur Durchführung des Verfahrens**

(30) Priorität: 18.12.2007 DE 102007061621
(71) Anmelder: Schulze und Matthes G.b.R., 10963 Berlin (DE)
(72) Erfinder: Schulze, Markus, 14057, Berlin (DE); Matthes, Siegfried, 10719, Berlin (DE)
(74) Vertreter: Gulde Hengelhaupt Ziebig & Schneider

(57) **Zusammenfassung**

Die Erfindung betrifft ein Verfahren zur Erhöhung der Lagesicherheit von Bodenmassen, die, geschüttet oder natürlich anstehend, durch Einführung von Verfestigungselementen an einer Lageveränderung gehindert werden, wobei die Verfestigungselemente als vegetative Strukturen ausgebildet sind. Erfindungsgemäß werden die Verfestigungselemente (1), bruchgefährdende Bildung von Randbereichen ausschließend und durch Verwurzelung ihre Wirkung auf Randbereiche der Bodenmassen (2) übertragend und somit mit ihrer Wurzelbildung in umliegende Bodenmassen (2) eingreifend, in die Bodenmassen (2) eingeordnet. Weitere Gegenstände der Erfindung sind eine Anordnung zur Erhöhung der Lagesicherheit von Bodenmassen (2), wobei die Bodenmassen (2) geschüttet oder natürlich anstehend, durch Einführung von Verfestigungselementen (1) an einer Lageveränderung gehindert sind und vegetative Verfestigungselemente (1) aufweisen, und ein Verfahren zur Herstellung eines geschüttete oder natürlich anstehende Bodenmassen (2) umfassenden Hanges oder Walles unter Zuhilfenahme des erfindungsgemäßen Verfahrens zur Erhöhung der Lagesicherheit von Bodenmassen (2).

## Beschreibung

Die Erfindung betrifft ein Verfahren zur Erhöhung der Lagesicherheit von natürlich anstehenden oder geschütteten Bodenmassen, die durch Einführung von Verfestigungselementen, vorzugsweise vegetativen Verfestigungselementen, an einer Lageveränderung gehindert werden, dazu verwendete Verfestigungselemente und deren Anordnung zur Durchführung des Verfahrens.

Aus der EP PS 691 437 B1 ist ein Verfahren zur Verfestigung von Hängen mit lebenden oder adventiv wurzelbildenden Pflanzen oder Pflanzenteilen bekannt, deren Anordnung und Dimensionierung mit der Maßgabe erfolgt, durch den Einbau der Pflanzen und deren Wurzelbildung im Boden diesen als festen, abgegrenzten, mit eigenständiger Verfestigung, Monolithen auszubilden. Als Hauptmerkmal der erfindungsgemäßen Lösung wird angefügt, dass der Mindestdurchmesser der Pflanzen und/oder Pflanzenteile, deren Tiefe und das Rastermaß abhängig von der Neigung und der Materialbeschaffenheit des Hanges, mittels aus der Bodenmechanik bekannter Rechenverfahren ermittelt wird, mit der angestrebten Wirkung die bodenmechanischen Brucheigenschaften des Bodens so zu stören, dass dieser als Monolith reagiert. Die erfindungsgemäße Lösung weist den Nachteil auf, dass die Benutzung der Erfindung nur mit bekannten Rechenverfahren erfolgen kann. Neue Möglichkeiten der Berechnung sind dadurch ausgegrenzt und weiterhin ist der erhebliche Nachteil zu verzeichnen, dass ein Monolith mit Abgrenzung gegenüber umliegende Bodenmassen gebildet ist und dadurch eine labile, nicht gebundene Einordnung der zu einem Monolithen gestalteten, verfestigten Bodenmassen in Abgrenzung von den umliegenden Massen vorhanden ist.

Die EP PS 857 415 B1 offenbart eine Grünverbauung geschütteter, anstehender Bauflächen mit vegetativ wirksamen Armierungen. Dafür werden in einer Anordnung zur Durchführung der Verbauung Körbe, Stützbogen, Drähte und Skelettkörper verwendet.

Der Erfindung liegt die Aufgabe zugrunde, ein Verfahren zur Erhöhung der Lagesicherheit von natürlich anstehenden oder geschütteten Bodenmassen, die durch Einführung von Verfestigungselementen, vorzugsweise vegetativen Verfestigungselementen, an einer Lageveränderung gehindert werden, dazu verwendete vegetative Verfestigungselemente und deren Anordnung zur Durchführung des Verfahrens zu schaffen, mit denen es gewährleistet ist, eine sichere Verfestigung von Bodenmassen zu erreichen und eine homogene Einbindung dieser Bodenmassen in den umliegenden Boden zu sichern.

Die Erfindung löst die Aufgabe durch ein Verfahren zur Erhöhung der Lagesicherheit von natürlich anstehenden oder geschütteten Bodenmassen, die durch Einführung von vegetativen Verfestigungselementen an einer Lageveränderung gehindert werden, wobei die Verfestigungselemente, vorhandene Strukturen erhaltend, in einem flächigen Raster, horizontal bestimmt, annähernd vertikal ausgerichtet, in große Tiefen reichend sich untereinander sowie in angrenzenden Bodenmassen bruchgefährdende Ausbildung von Randbereichen ausschließend, durch Verwurzelung ihre adhäsive Wirkung aus den Kernbereichen übergreifend, verbindend auf die Randbereiche übertragen und mit einer tiefgreifenden, sich verflechtenden, breit angelegten, angepasst übergreifenden Wurzelbildung in umliegende Bodenmassen, großräumig in horizontaler und vertikaler Richtung eingreifend, wechselnde Verfestigungsgrößen einschließend, eingeordnet werden.

In einer Ausgestaltung des Verfahrens ist vorgesehen, dass das Verfahren derart durchgeführt wird, dass eine intermittierende Rasterbildung mit gleitenden, sich zu den Randbereichen hin verändernden horizontalen Abständen der Lage der Verfestigungselemente, eine Vergleichmäßigung des Verlaufes der Bodenverfestigung und Lagesicherheit der Bodenmassen erhalten wird.

Es ist eine vorteilhafte Ausgestaltung der erfindungsgemäßen Lösung, dass die vegetativen Verfestigungselemente in große Tiefen reichend, in vertikaler Richtung in die Bodenmassen eingebracht werden, wobei die Erfindung wirkungsvoll variiert ist, wenn die Verfestigungselemente im Kernbereich in große Tiefen reichend eingebracht und zu den Randzonen hin gerichtet, in ihrer Tiefenerstreckung sich verändernd, eingeordnet sind. Es ist eine sinnvolle Ausbildung der Erfindung, dass die Verfestigungselemente in große Tiefen eingreifend eingebracht und zu den Randzonen gerichtet, sich von den Kernbereichen entfernend sich in ihrer Tiefenerstreckung verringern. Weiter sinnvoll ausgebildet ist die Erfindung, dass die Verfestigungselemente in große Tiefen eingreifend eingebracht, zu den Randzonen gerichtet, sich von den Kernbereichen entfernend sich in ihrer Tiefenerstreckung vergrößern. Die Erfindung ist weitergeführt, wenn die Verfestigungselemente in ihren Kernbereichen in große Tiefen eingreifend eingebracht werden und zu den Randbereichen hin in ihren Tiefenerstreckungen wellenförmig verlaufend eingeordnet werden und dadurch die Anordnung von Sollbruchstellen bei Einhaltung einer darin vorliegenden, vorbestimmten Verfestigung erreicht wird. Dem Grundgedanken der Erfindung folgend, werden die Verfestigungselemente in große Tiefen reichend, aus der vertikalen Richtung abweichend, in die Bodenmassen eingebracht, wobei es sinnvoll ist, wenn die Verfestigungselemente mit vertikal gleichmäßiger Erstreckung in die Bodenmassen eingebracht werden oder sinnvoll variiert, mit vertikal ungleichförmiger Erstreckung in die Bodenmassen ragen. Eine weitere Vervollständigung der erfindungsgemäßen Lösung erhält die Offenbarung dadurch, dass die Verfestigungselemente im mittleren Bereich bzw. im Kernbereich der Bodenmassen mit horizontal geringem Rasterabstand, in große Tiefen reichend sowie in den sich vom mittleren Bereich sich entfernenden Bereich, in sich erweiternden Abständen und geringer reichender Tiefe eingearbeitet sind. Das Verfahren ist vorteilhaft weitergebildet, wenn die Verfestigungselemente im mittleren Bereich der Bodenmassen mit horizontal weitem Abstand, in große Tiefen reichend sowie in den sich vom mittleren Bereich sich entfernenden Bereich, in sich verringernden Abständen und große Tiefe reichend eingearbeitet werden. Die Erfindung erfüllt sich auch darin, wenn die vegetativen Verfestigungselemente dem Grundzug der Erfindung folgend, in Hangneigung natürlich gewachsener oder auch geschütteter Bodenmassen verfahrensgemäß eingearbeitet werden. Bei geringen Hangneigungen werden in der Regel die Verfestigungselemente in vertikaler Richtung eingearbeitet. Dabei ist es auch möglich und vor allen Dingen beim Bau von geschütteten Dämmen vorteilhaft, insbesondere bei geschütteten Dämmen und Wällen, wenn die Verfestigungselemente in waagerechter bzw. annähernd waagerechter Richtung dabei in ihrer Neigung positiv bzw. negativ liegend, bei der schichtweisen Schüttung der Dämme während des Baufortschritts mit Hangneigung eingearbeitet werden. Bei steilen Hangneigungen sieht die Erfindung vor, die Verfestigungselemente senkrecht zur Böschungsoberfläche einzufügen. In Fortführung der Erfindung können die Verfestigungselemente bei steilen Hangneigungen auch annähernd senkrecht, das heißt mit geringfügigen Abweichungen aus der Senkrechten zur Böschungsoberfläche, mit auszuwählenden Einbauverfahren in die Hänge eingearbeitet werden. Eine weitere sinnvolle Ausformung der Erfindung ist darin zu sehen, dass die Verfestigungselemente mittels schonender, die Struktur erhaltender, Einbaumethoden eingebracht werden, die sich in einem Verfahren zum Einspülen der Verfestigungselemente oder auch in dem Einfügen der Elemente in vorgefertigte Bohrlöcher manifestiert. Eine weitere Ausgestaltung erhält die Erfindung dadurch, dass die Einbauabstände sowie Einbautiefen mit der Beschaffenheit der behandelten Erdmassen unter Ausschaltung von abrupten Grenzbruchflächen der behandelten und der umliegenden Bodenmassen korrespondieren. Es ist eine vorteilhafte Form der Erfindung, dass die Verfestigungselemente aus vegetativ aktivem Material ausgebildet sind, wobei es weiter im Sinne der Erfindung ist, dass die Verfestigungselemente in ihrer Wurzelbildung nicht vorzutreiben sind und keine sichtbaren Startknospen aufweisen. Die erfindungsgemäße Lösung präzisiert sich, wenn die Verfestigungselemente in Tiefen von 0,5 - 8 m reichend in die Bodenmassen eingeordnet werden, wobei in Erfüllung der erfindungsgemäßen Lösung der Einbauabstand der Verfestigungselemente zueinander, abhängig von der Struktur der Bodennassen sowie der zu wählenden Verfestigungsstufe, mit wählbaren Rastern von 0,5 - 3 m horizontaler Abstände, eingebaut werden. Es ist eine vorteilhafte Lösung, wenn bei Dämmen und Wällen die Verfestigungselemente in die schichtweise einzubringenden Bodenmassen, als Planum ausgebildet, auf die jeweilige Schicht aufgelegt, überschüttet und entsprechend den gewählten vertikalen Abständen erneut eingelegt werden. Die erfindungsgemäße Lösung wird in einer Anordnung zur Erhöhung der Lagesicherheit von Bodenmassen weitergeführt, die geschüttet oder natürlich anstehend, durch Einführung von Verfestigungselementen an einer Lageveränderung gehindert werden und vegetative Verfestigungselemente aufweisen, wobei die Verfestigungselemente in große Einbautiefen reichend, entsprechend den vorliegenden Bodenwerten auf der Grundlage von errechneten Parametern ihren Tiefenerstreckungen sowie horizontalen Einbauabständen den gestellten Erfordernissen angepasst, in die Bodenmassen eingebracht sind, wodurch die lagegesicherten Bodenmassen keinen Monolithen ausbilden.

Das heißt, dass die Verfestigungselemente, in große Tiefen reichend, entsprechend vorliegender Bodenwerte auf der Grundlage von errechneten Parametern in ihren Tiefenerstreckungen sowie horizontalen Abständen, geformt in einem Raster, den jeweiligen Erfordernissen angepasst, in das Erdreich eingelagert sind.

Weiterführend sind entsprechend der Erfindung die Verfestigungselemente in Schüttdämmen, angepasst an die jeweilige Schütthöhe des erreichten Baufortschrittes, auf ein vorgefertigtes Planum aufgelegt und durch Überschüttung mit einer nächsten Schicht eingelagert. Die erfindungsgemäße Anordnung manifestiert sich weiterhin darin, dass die Verfestigungselemente in ihrer Tiefenerstreckung wellenförmig verlaufend angeordnet sind und ihr Belaubungsüberstand aus dem Boden herausragt. Die erfindungsgemäße Lösung vervollständigt sich damit, dass die Verfestigungselemente in einer in ihren Abständen und Tiefenerstreckungen intermittierenden Anordnung eingebaut sind und damit Sollbruchstellen ermöglicht werden, die vorausschaubar in die verfestigten Flächen einzuordnen sind.

Vorteilhafterweise sind die Verfestigungselemente aus lebenden Pflanzen oder Pflanzenteilen in einem Stück gebildet und in die Bodenmassen mit herausragenden Belaubungsteilen eingeordnet.

Die Erfindung weist sehr große bauliche, statische sowie wirtschaftliche Vorteile auf. Zum einen sind die verwendeten vegetativen Verfestigungselemente nachwachsend in ausreichender Menge verfügbar. Sie sind durch eingefahrene Methoden ausreichend schonend in die Bodenmassen einzubringen und können dort bis in große Tiefen reichend verwurzeln. Die erfindungsgemäß gewählte Variationsmöglichkeit der verfahrensgemäß einzuordnenden, tiefgreifenden Verfestigungselemente, das heißt, dass Verfestigungselemente in sehr große Tiefen, in größer und minder große Tiefen eingreifend, eingeordnet werden können und auch, korrespondierend mit den jeweiligen Tiefenerfordernissen, in notwendig gleichmäßigen oder ungleichmäßigen horizontalen Rasterabständen eingebaut, eine vielgestaltige, gleichmäßige oder ungleichmäßige Bodenbefestigung vorherbestimmt zu erreichen ist. Gegenüber dem bekannten Stand der Technik haben sich die Rechenmethoden weiterentwickelt. Es ist dem Fachmann jetzt an die Hand gegeben, wechselnde Verfestigungswerte, auch in wiederholender Art, für eine Bodenregion vorauszuberechnen und dabei wechselnd Zonen mit großer Verfestigung und mit geringer Verfestigung zu erreichen sowie dabei eine Monolithbildung in der Form von Inselbildung zu vermeiden. Weiterhin ist es vorteilhaft, dass jetzt Sollbruchstellen direkt vorausberechnet zu initiieren sind und damit einer Zerstörung der gewählten großflächigen Verfestigung entgegengewirkt werden kann.

Das heißt, dass zur Lösung der Aufgabe erfindungsgemäß ein Verfahren zur Erhöhung der Lagesicherheit von Bodenmassen zur Verfügung gestellt wird, die, geschüttet oder natürlich anstehend, durch Einführung von Verfestigungselementen an einer Lageveränderung gehindert werden, wobei die Verfestigungselemente als vegetative Strukturen ausgebildet sind. Erfindungsgemäß werden die Verfestigungselemente, bruchgefährdende Bildung von Randbereichen ausschließend und durch Verwurzelung ihre Wirkung auf Randbereiche der Bodenmassen übertragend und somit mit ihrer Wurzelbildung in umliegende Bodenmassen eingreifend, in die Bodenmassen eingeordnet.

Unter geschütteten oder natürlich anstehenden Bodenmassen sind hierbei alle Hänge, Böschungen, Dämme oder Wälle zu verstehen, die durch Schüttung, Anschnitt oder Abgrabung entstanden sind oder natürlich anstehen.

Das heißt, dass die Verfestigungselemente derart in die zu sichernden Bodenmassen eingelagert werden, dass sich, insbesondere bei Wachstum der Wurzeln, sich diese über die Grenzen der zu sichernden Bodenmasse beziehungsweise Bodenmassen erstrecken und somit eine Monolithbildung im Bereich der zu sichernden Bodenmassen verhindert wird.

Es ist dabei bevorzugt vorgesehen, dass die Einordnung der Verfestigungselemente entsprechend den vorliegenden Bodenwerten auf der Grundlage von errechneten Parametern erfolgt. Das heißt, dass bevorzugt die Einbringung der Verfestigungselemente in derartigen Abständen zueinander und zum Grenzbereich der zu verfestigenden Bodenmasse und/oder in derartigen Tiefen und/oder unterschiedlichen Tiefen- oder Winkelmaßen je Verfestigungselement erfolgt, wie es eine Simulationsberechnung unter Beachtung der Umgebungsparameter wie zum Beispiel Dichte, Feuchtigkeit und Belastung der Bodenmasse ergibt.

Es kann dabei vorgesehen sein, dass die Verfestigungselemente im Zentrum ihres Einbringungsgebietes in Tiefen reichend eingebracht werden, die tiefer sind als die Einbringungstiefen an den Randzonen des Einbringungsgebietes, und vom Zentrum ausgehend zu den Randzonen hin gerichtet in ihrer Tiefenerstreckung sich verändernd eingeordnet werden. Das Zentrum des Einbringungsgebietes ist somit der so genannte Kernbereich.

In einer Verfahrensausgestaltung werden die Verfestigungselemente im Zentrum ihres Einbringungsgebietes in größere Tiefen eingreifend als in der Randzone eingebracht und in vom Zentrum entfernten Positionen in ihrer Tiefenerstreckung verringert eingebracht. Das heißt, dass je weiter die Position des Verfestigungselementes vom Zentrum entfernt ist, umso geringer die Tiefenerstreckung der Einbautiefe ist.

In einer alternativen Verfahrensausgestaltung werden die Verfestigungselemente im Zentrum ihres Einbringungsgebietes in bestimmter Tiefe eingreifend eingebracht und vom Zentrum ausgehend zu den Randzonen gerichtet in größeren Tiefen als im Zentrum eingebracht.

In besonderer Ausgestaltung ist vorgesehen, dass die Verfestigungselemente, ausgehend vom Zentrum ihres Einbringungsgebietes derart angeordnet werden, dass zu den Randbereichen hin ihre Tiefenerstreckungen wellenförmig verlaufen und dadurch die Anordnung von Sollbruchstellen bei Einhaltung einer darin vorliegenden, vorbestimmten Verfestigung erreicht wird.

Es kann des Weiteren vorgehen sein, dass die Verfestigungselemente im Zentrum ihres Einbringungsgebietes mit horizontal geringerem Rasterabstand als in den vom Zentrum ihres Einbringungsgebietes entfernten Bereichen eingearbeitet werden, oder dass die Verfestigungselemente im Zentrum ihres Einbringungsgebietes mit horizontal größerem Rasterabstand als in den vom Zentrum ihres Einbringungsgebietes entfernten Bereichen eingearbeitet werden. Beide Verfahrensvarianten können weitergehend dadurch ausgestaltet sein, dass die Einbringungstiefe der Verfestigungselemente in den vom Zentrum ihres Einbringungsgebietes entfernten Bereichen größer ist als die Einbringungstiefe im Zentrum des Einbringungsgebietes.

In einer vorteilhaften Ausgestaltung ist vorgesehen, dass bei geringer Hangneigung, insbesondere von geschütteten beziehungsweise zu schüttendenden Dämmen und Wällen, die Verfestigungselemente in im Wesentlichen waagerechter Lage während des Baufortschrittes eingearbeitet werden. Eine Hangneigung soll dann als gering angesehen werden, wenn sie nicht mehr als 10° beträgt.

Die Einbringung der Verfesfigungselemente in die Bodenmasse kann mittels Einspülen oder Stecken in vorgefertigte Bohrlöcher erfolgen. Die Bohrlöcher sind vorteilhafterweise in den geschütteten oder natürlichen Hang eingearbeitet worden.

Hinsichtlich der Einbringtiefe der Verfestigungselemente ist bevorzugt vorgesehen, dass diese in Tiefen von 0,5 bis 8 m reichend in die Bodenmassen eingeordnet werden.

Zur Lösung der Aufgabe wird außerdem eine Anordnung zur Erhöhung der Lagesicherheit von Bodenmassen gestellt, wobei die Bodenmassen geschüttet oder natürlich anstehend, durch Einführung von Verfestigungselementen an einer Lageveränderung gehindert sind und vegetative Verfestigungselemente aufweisen. Erfindungsgemäß sind die Verfestigungselemente entsprechend von auf der Grundlage vorliegender Bodenwerte errechneter Parameter hinsichtlich ihrer Tiefenerstreckungen sowie horizontalen Einbauabständen in die Bodenmassen eingebracht, wodurch die lagegesicherten Bodenmassen keinen Monolithen ausbilden beziehungsweise eine Monolithbildung verhindert wird. Das heißt, dass die Tiefenerstreckungen und horizontale Einbauabstände mittels Berechnungen ermittelt werden, wobei in die Berechnungen die Werte der zu befestigenden Bodenmasse und/oder der umgebenden beziehungsweise angrenzenden Bodenmassen einbezogen werden und somit die erfindungsgemäße Anordnung den gestellten Erfordernissen angepasst wird. Die Berechnung der einzelnen Parameter bezieht als Faktor mit ein, dass durch die eingebrachten oder einzubringenden Verfestigungselemente die Ausbildung eines Monolithen im Bereich der Bodenmasse, in die die Verfestigungselemente eingebracht werden, verhindert wird. Bevorzugt sind in der erfindungsgemäßen Anordnung die Verfestigungselemente bis in große Einbautiefen reichend eingebracht.

Es ist bevorzugt vorgesehen, dass die Verfestigungselemente bei einer vertikalen oder annähernd vertikalen Einbaulage in Bezug zu in einer selben Reihe angeordneten Verfestigungselementen derartige unterschiedliche Einbautiefen aufweisen, dass sich in der Reihe ein wellenförmiger Verlauf der Einbautiefen ergibt, wobei die Verfestigungselemente einen jeweils unterschiedlichen Einbauabstand zueinander aufweisen.

Es kann dabei vorgesehen sein, dass die Verfestigungselemente in horizontal und vertikal unterschiedlichen Einbauabständen beziehungsweise Einbautiefen derart angeordnet sind, dass Sollbruchstellen in den Bodenmassen eingeordnet sind. Das heißt, dass mittels der Verfestigungselemente erreicht wird, dass die Bodenmassen sich mit umgebenden Bodenmassen verbinden, so dass eine Monolithbildung der zu verfestigenden Bodenmasse ausgeschlossen wird. Da bei Belastungen des zu verfestigenden Hanges oder Walles also nicht die gesamte behandelte Bodenmasse als Monolith Relativbewegungen in Bezug zu umgebenden Bodenmassen ausführen darf, werden Sollbruchstellen eingearbeitet, die eine Trennung von Teilen der behandelten Bodenmasse ermöglichen und somit dazu führen, dass die Ränder der verfestigten Bodenmasse sich nicht von den umgebenden Bodenmassen lösen.

Die Einbautiefen und Einbauabstände sind dabei bevorzugt derart dimensioniert, dass wechselnde Abstandsmaße und Tiefenmaße realisiert sind. Das heißt zum Beispiel, dass benachbart zu einem ersten Verfestigungselement mit größerer Tiefe ein zweites Verfestigungselement mit geringerer Tiefe eingebaut ist und in der selben Reihe neben diesem zweiten Verfestigungselement wiederum ein drittes Verfestigungselement eingebaut ist, welches eine größere Einbautiefe aufweist als die des zweiten Verfestigungselementes.

Der Einbauabstand zwischen dem ersten und zweiten Verfestigungselement kann dabei größer oder kleiner sein als der Einbauabstand zwischen dem zweiten und dem dritten Verfestigungselement. Das heißt, dass die Einbautiefe eines jeden Verfestigungselementes in Bezug zu dem in der selben Reihe angeordneten, benachbarten Verfestigungselement unterschiedlich ist. Dasselbe betrifft die Einbauabstände, wobei der Einbauabstand zwischen einem ersten und zweiten Verfestigungselement der selben Reihe unterschiedlich ist zu dem Einbauabstand zwischen dem zweiten und einem dritten Verfestigungselement derselben Reihe, wobei sich dieses Anordnungssystem in der Reihe fortsetzt.

Außerdem wird zur Lösung der Aufgabe ein Verfahren zur Herstellung eines geschüttete oder natürlich anstehende Bodenmassen umfassenden Hanges oder Walles zur Verfügung gestellt, bei welchem das erfindungsgemäße Verfahren zur Erhöhung der Lagesicherheit von Bodenmassen, gegebenenfalls mit seinen vorteilhaften Ausgestaltungen, ausgeführt wird.

Das heißt, dass mittels des erfindungsgemäßen Verfahrens zur Erhöhung der Lagesicherheit von Bodenmassen, die geschüttet oder natürlich anstehend sind, diese durch Einführung von Verfestigungselementen an einer Lageveränderung gehindert werden, wobei die Verfestigungselemente als vegetative Strukturen ausgebildet sind. Erfindungsgemäß werden die Verfestigungselemente, bruchgefährdende Bildung von Randbereichen ausschließend und durch Verwurzelung ihre Wirkung auf Randbereiche der Bodenmassen übertragend und somit mit ihrer Wurzelbildung in umliegende Bodenmassen eingreifend, in die Bodenmassen eingeordnet, wodurch ein Hang oder Wall hergestellt wird.

Die Erfindung soll anhand eines Ausführungsbeispieles näher erläutert werden. In der zugehörigen Zeichnung zeigen:
- Fig. 1: eine schematische, axonometrische Darstellung der Anordnung in einem vegetativ armiertem Ausschnitt eines Erdkörpers;
- Fig. 2: eine Anordnung der Verfestigungselemente im senkrechten Einbau in einer Ebene;
- Fig. 3: eine Anordnung der Verfestigungselemente bei einem senkrechten Einbau in Böschungen;
- Fig. 4: eine Anordnung der Verfestigungselemente rechwinklig zur Böschungsoberfläche;
- Fig. 5: eine Anordnung der Verfestigungselemente in annähernd horizontaler Lage in Hängen mit geringer Hangneigung.
- Fig. 6: eine Darstellung ähnlich Fig. 1 mit Anordnung der Verfestigungselemente mit intermittierenden, sich aus dem Kernbereich entfernenden, größeren Abständen;
- Fig. 7: eine Anordnung der Verfestigungselemente in einer Ebene mit veränderlichen, sich vom Kernbereich gleitend vergrößernden Tiefenerstreckungen;
- Fig. 8: eine Anordnung der Verfestigungselemente in einer Ebene mit veränderlichen, sich vom Kernbereich gleitend vergrößernden, horizontalen Erstreckungen;
- Fig. 9: eine Anordnung der Verfestigungselemente in einer Ebene mit veränderlichen, sich vom Kernbereich entfernenden, gleitend verändernden Horizontalen- und Tiefenerstreckungen;
- Fig. 10: eine ausgewählte Übersicht grundsätzlich möglicher Varianten als bildhafte Gegenüberstellung.

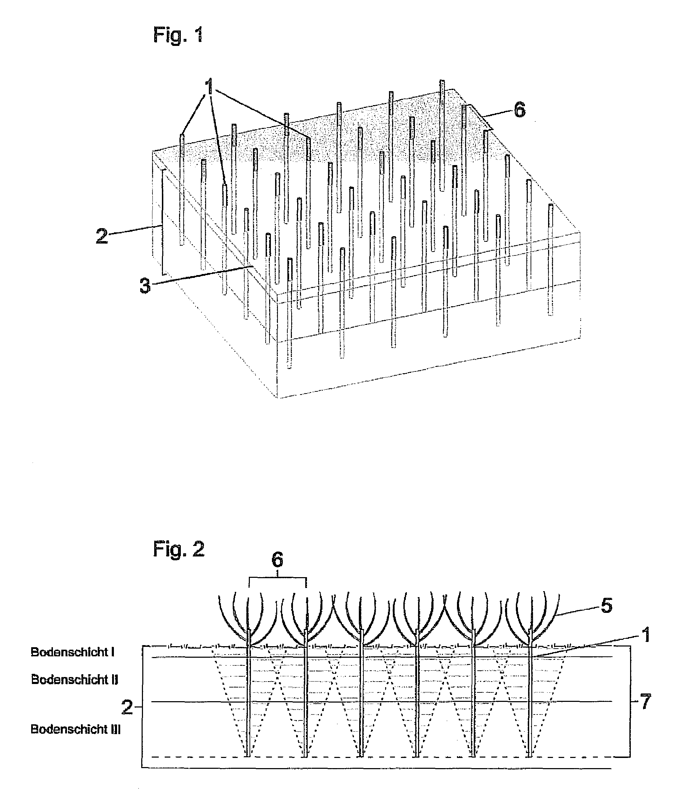

Die ausgewählten Fig. 1 bis 9 des Ausführungsbeispieles zeigen präzisierende, ausgewählte Beispiele von Ausführungen der Anordnung zur Durchführung des erfindungsgemäßen Verfahrens. Alle Ausführungen sind darauf gerichtet, eine durchgehende, wirkungsvolle Bodenverfestigung großer Regionen ohne eine Monolithbildung zu erreichen.

Fig. 1 zeigt die schematische Darstellung des Einbaus der vegetativ aktiven Verfestigungselemente 1 in einen ausgewählten Abschnitt homogener Erdtrassen 2. Hier sind die horizontalen Einbauabstände 6 (Raster) gleichmäßig in Richtung der x- und y-Achse ausgewählt. Ebenfalls ist die Einbautiefe 7 gleichmäßig, wobei hier nur ein günstiger, theoretisch angenommenen Fall von vorliegenden Bodenmassen 2 zur Demonstration des grundsätzlichen Verfahrens angenommen wird. Dabei sind die Verfestigungselemente 1 aus langgestreckten, vegetativ aktivem Pflanzenmaterial gebildet, welche vertikal, miteinander parallel verlaufend, eingebracht sind und eine dichte Verwurzelung bilden.

Fig. 2 zeigt den Einbau der vegetativen Verfestigungselemente 1 in einer Ebene mit ausgewählt mehreren Bodenschichten in einer großen Einbautiefe 7. Die Verfestigungselemente 1 durchragen parallel, mit gleichmäßigen Abständen, in große Tiefen 7 reichend mehrere Bodenschichten, hier die Bodenschichten I, II, III und verfestigen sie durch ihre Wurzelbildung gleichförmig und sich überlappend. Die Darstellung gemäß Fig. 2 zeigt, dass die Verfestigungselemente 1 in einer bestimmten Länge aus den Bodenmassen 2 herausragen und einen Belaubungsteil 5 bilden können, um ihre vegetative Aktivität entfalten und erhalten zu können. Weiterhin sind die Belaubungsteile notwendig, um Luftströmungen, beispielsweise Winde, von der Oberfläche der Bodenmassen 2 abzuhalten und Erosionen zu vermeiden.

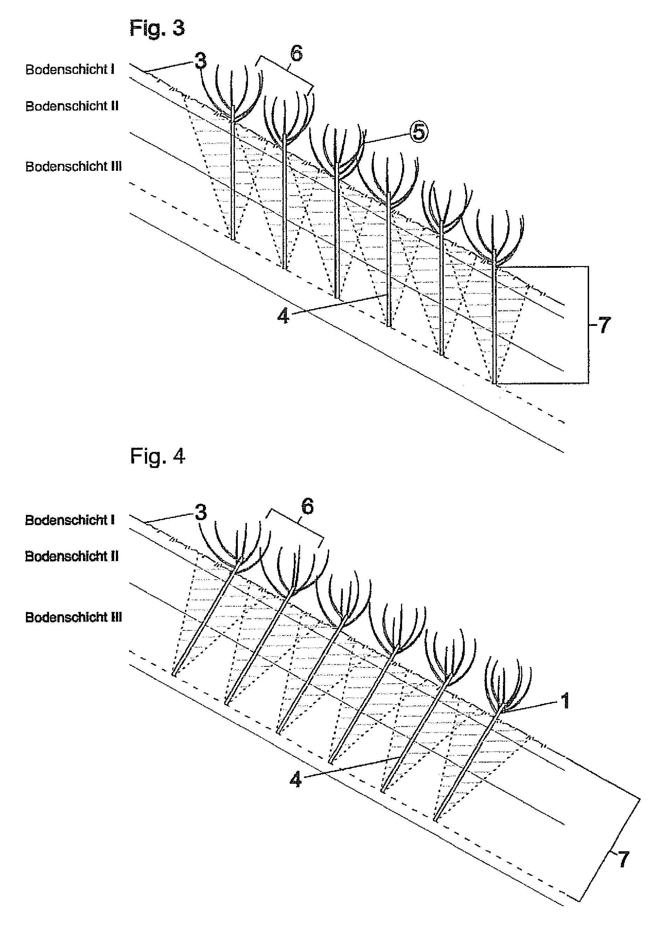

Fig. 3 zeigt eine weitere grundsätzliche Art des Einbaus in Böschungen. Entsprechend dieser Darstellung sind die Verfestigungselemente 1 mit gleichmäßigen Einbauabständen 6, die Bodenschichten I, II, III in vertikaler Richtung durchdringend und verfestigend, eingesetzt. Hier sind die Tiefen 7 gleichförmig ausgebildet.

Fig. 4 zeigt eine ähnliche Hanglage mit gleichen Bodenschichten I, II, III. Gemäß dieser Ausführung ist die Hangneigung 3 geringfügiger und die Verfestigungselemente 1 sind dabei senkrecht zur Böschungsoberfläche in die Bodenmassen 2 eingebracht. Die Einbauabstände 6 sind in flächiger Verteilung sowie die senkrechten Einbautiefen 7 gleichmäßig. Der mitlesende Fachmann erkennt, dass hier jeweils Hangneigungen ausgeführt sind, die natürlich gewachsen oder bereits längere Zeit anstehend sind. Nicht gezeigt sind im Ausführungsbeispiel Böschungsoberflächen von Wällen und Dämmen, die durch Schüttung hergestellt worden sind. Hier werden selbstverständlich die Verfestigungselemente 1 in einer horizontalen oder wahlweise annähernd horizontalen Einbaulage 4 auf die jeweils erreichten Schichten des Baufortschrittes des Baukörpers aufgelegt und im weiteren Baufortschritt überschüttet. Sie ragen mit ihren Belaubungsteilen 5 aus der Böschung heraus.

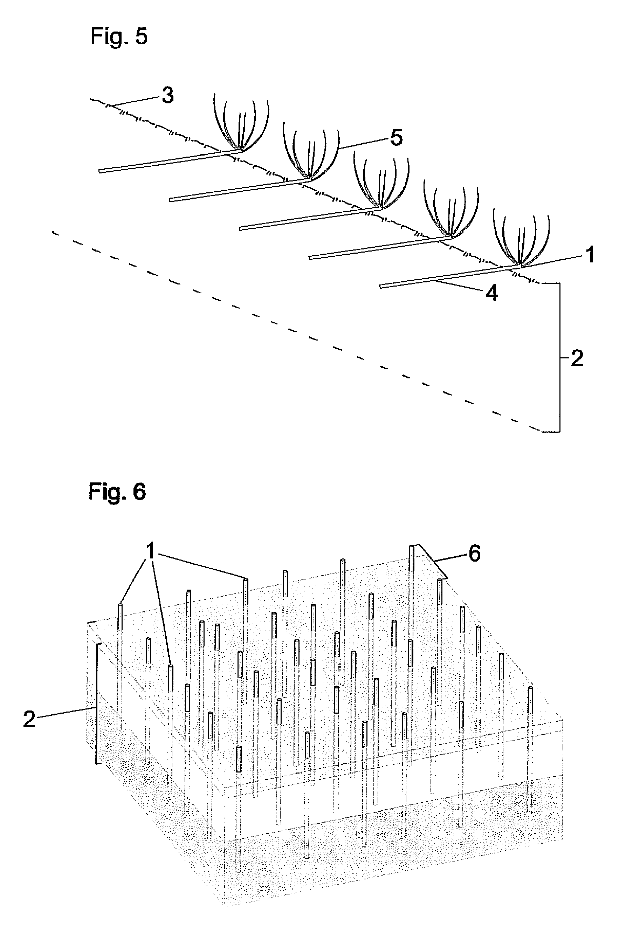

Die folgenden Fig. 5 bis 9 zeigen ausgewählte Beispiele der Variations- und Anwendungsmöglichkeiten der grundsätzlichen erfindungsgemäßen Lösung, ohne jedoch in ihrer Darstellung sämtliche in der Praxis anwendbaren Möglichkeiten ausschöpfen zu können.

Fig. 5 zeigt eine Ausführungsmöglichkeit, welche vorstehend bereits interpretiert worden ist, aber auch an Böschungen von Dämmen und Wällen anzuwenden ist, die nicht geschüttet worden sind. Die Böschung oder der Hang weisen hier eine sehr geringe Neigung 3 auf. Die Verfestigungselemente 1 sind in einer annähernd horizontalen, mit ihren eingebauten Teilen leicht zum Boden neigenden Einbautiefe 7, in die Bodenmassen 2 eingeordnet. Die Einbaulagen 4 der Elemente 1 sind hier in ihren Abständen gleichförmig.

Fig. 6 zeigt in einer der Fig. 1 ähnlichen axonometrischen Darstellung die Einbaulage 4 von Verfestigungselementen 1 in Bodenmassen 2 mit aus dem Kernbereich sich vergrößernden Einbauabständen 6 und gleichen Einbautiefen 7.

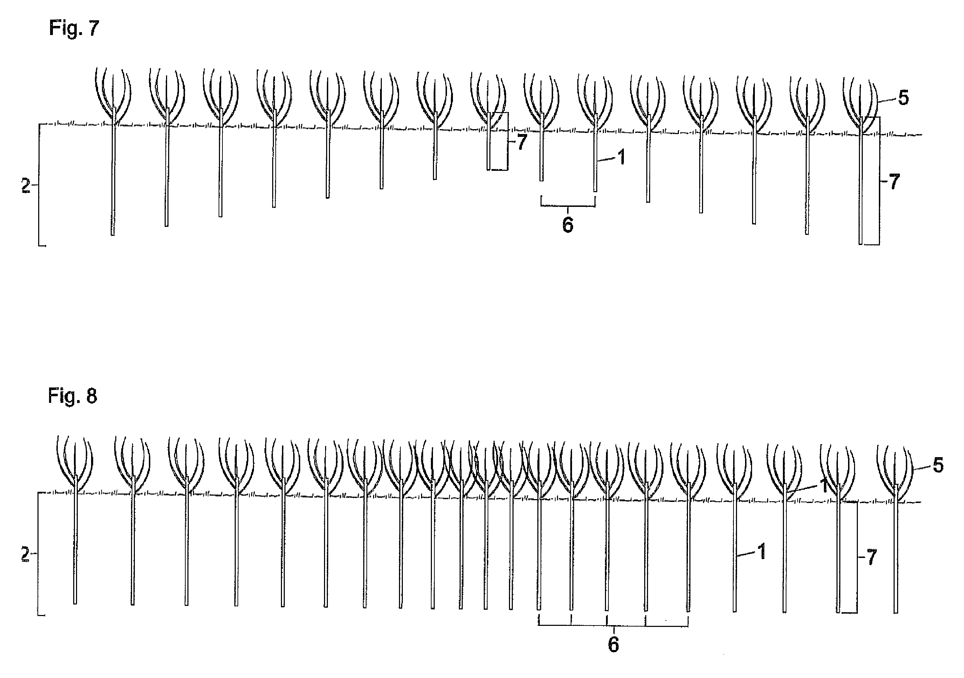

Gemäß Fig. 7 sind die Verfestigungselemente 1 in horizontal oder auch annähernd horizontal anstehende Bodenmassen 2 eingeordnet. Ihre Einbautiefe 7 ist so ausgebildet, dass aus dem Kernbereich heraus die Einbauabstände 6 gleichmäßig sind, jedoch die Einbautiefen sich in einem gewählt gleichmäßigen Zuwachs, aus dem Kernbereich sich entfernend, vergrößern. Jetzt ist es möglich, auch durch die Kenntnis modernster fortgeschrittener Rechenverfahren, den Einbau der Verfestigungselemente 1 so zu gestalten, dass bei homogen ausgebildeten Bodenmassen 2 unterschiedliche Verfestigungswerte erreicht werden können oder auch bei heterogen ausgebildeten Bodenmassen 2 durch die unterschiedlichen Einbautiefen 7 gleiche Verfestigungswerte zu erreichen sind.

Fig. 8 folgt dieser erfindungsgemäßen Richtung im Grundsatz. Hier ist die Oberfläche, wie in Fig. 7, horizontal oder annähernd horizontal ausgebildet und die Verfestigungselemente 1 sind beispielhaft vertikal in den Boden 2 eingebracht. In dieser Lage wurden die Verfestigungselemente 1, sich vom Kernbereich entfernend, in immer größer werdenden Einbautiefen 7 angeordnet. Die horizontalen Einbauabstände 6 in den Bodenmassen 2 sind im Kernbereich sichtbar kleiner gehalten, um sich in horizontaler Richtung davon entfernend, immer größer zu werden. Der mitlesende Fachmann erkennt, dass es auch möglich ist, die vorteilhaften Gestaltungen der Einbauausführung der vegetativen Verfestigungselemente 1 gemäß den Fig. 7 und 8 miteinander zu verbinden und die technischen Vorteile einer großflächig wirksameren Verfestigung zu benutzen.

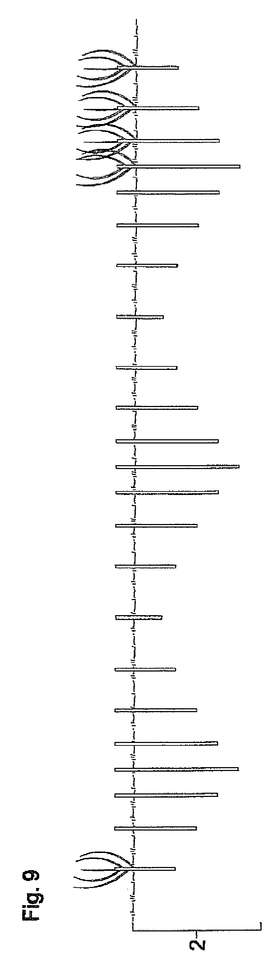

Dieser letztendlich technisch und wirtschaftlich immer zu stellenden Forderung folgt die Ausführung gemäß Fig. 9. Hier sind in Bodenmassen 2 mit ebenflächig bzw. horizontal oder annähernd horizontal vorliegenden Oberflächen voneinander beabstandet, mehrere Kernbereiche ausgewählt und rechnerisch vorbestimmt worden. In diesen Kernbereichen sind die Verfestigungselemente 1 jeweils mit geringem Einbauabstand 6 eingebracht, wobei sich ihr Einbauabstand 6, jeweils von einem Kernbereich entfernend, zu dem anderen Kernbereich hin wechselnd, verändert. Gleichzeitig verändern sich die Einbautiefen 7, so dass sich von Kernbereich zu Kernbereich wellenförmige Linien der Einbautiefen 7 der Verfestigungselemente 1 ausbilden, die in Bereichen des größeren Abstandes der Verfestigungselemente 1 voneinander ihre geringste Einbautiefe 7 haben und im Kernbereich mit geringeren Einbauabständen ihre größte Tiefe aufweisen. Damit ist es möglich, Sollbruchstellen der großflächig verfestigten Bodenmassen festzulegen, die mögliche Richtung des Abdriften im Voraus zu bestimmen oder zu vermeiden. Der mitlesende Fachmann erkennt selbstverständlich, dass es auch möglich ist, die vorbestimmte Verfestigungsart zu verändern und je nach den Eigenschaften der Bodenmassen 2 und zu den gestellten Anforderungen, das Raster des Einbauabstandes 6 sowie die damit korrespondierende Einbautiefe 7 zu verändern. Der auf diesem Gebiet tätige Fachmann erkennt im Grundsatz der dargestellten Lösungen, dass die Erfindung weitestgehend offenbart worden ist, jedoch die Baupraxis Anforderungen bereithält, die nur prinzipiell nicht einem dieser Ausführungsbeispiele entsprechen. Nach Kenntnis der vorliegenden Lösungsmöglichkeiten aus den Figuren 1 bis 9 ist es jedem Fachmann an die Hand gegeben, ohne erfinderisch tätig werden zu müssen, die erfindungsgemäße Lehre entsprechend auf diese Anforderungen anzuwenden. Das betrifft auch die vorliegende Möglichkeit, Wälle oder Dämme so zu schütten und die vegetativen Verfestigungselemente 1, entsprechend dem vertikalen Baufortschritt, in die doch teils sehr rölligen Bodenmassen 2 einzufügen. Ungeachtet dessen, dass die Verfestigungselemente 1 auf das Planum der entsprechend erreichten Schütthöhe aufgelegt werden und damit eine horizontale oder annähernd horizontale Lage erhalten, kann auch hier der Rasterabstand 6, also der Abstand der in horizontaler Lage eingebrachten Verfestigungselemente 1 sowie auch ihr, bezogen auf die Böschung zu erhaltender vertikaler Abstand voneinander, den Variationsmöglichkeiten, insbesondere den Figuren 7 bis 9 folgend ausgeführt werden. Die vegetativen Verfestigungselemente 1 sind verfahrensgemäß in jedem Fall lebende Pflanzen oder Pflanzenteile.

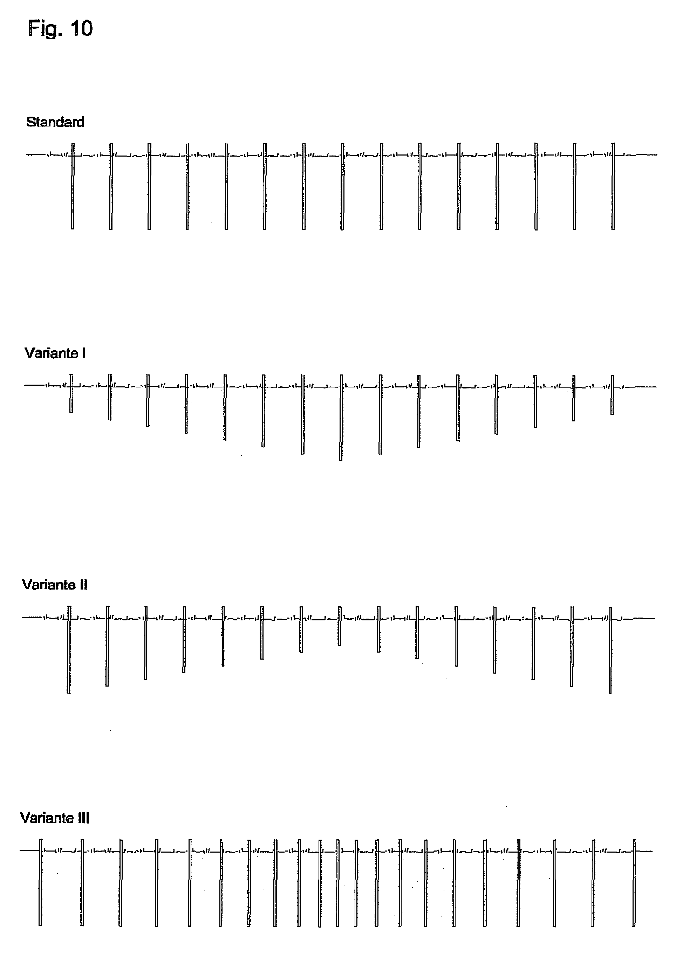

Fig. 10 zeigt eine bildhafte Gegenüberstellung der schon im Ausführungsbeispiel dargestellten Ausführungsarten der erfindungsgemäßen Lösung, um dem Betrachter die Variabilität der Einsatzmöglichkeiten der Verfestigungselemente als Übersicht vorzustellen. Dabei ist im Wesentlichen zu berücksichtigen, dass der mitlesende Fachmann feststellen kann, dass die Erfindung vor allem darin ausfüllt, dass zwischen den einzelnen Ausführungsarten Austauschmöglichkeiten gegeben sind, um aufzunehmende Belastungen der jeweiligen Bodenarten in ihrer horizontalen und vertikalen Wirkung vollständig zu berücksichtigen. So ist es möglich, die Varianten 1, 2 und 3 zu einer Verwendungsart praxiswirksam zusammenzufügen. Versuchsergebnisse zeigen, dass einte umfassende Verfestigung bzw. Verwurzelung der Bodenmassen 2 in kürzester Zeit durch nicht vorbehandelte Pflanzen oder Pflanzenteile erreicht wird.

### Bezugszeichenliste

- 1: Verfestigungselement
- 2: Bodenmasse
- 3: Böschung bzw. Hangneigung
- 4: Einbaulage
- 5: Belaubungsteil
- 6: Einbauabstand bzw. horizontales Raster
- 7: Einbautiefe

## Patentansprüche

1. Verfahren zur Erhöhung der Lagesicherheit von Bodenmassen, die, geschüttet oder natürlich anstehend, durch Einführung von Verfestigungselementen an einer Lageveränderung gehindert werden, wobei die Verfestigungselemente als vegetative Strukturen ausgebildet sind,
**dadurch gekennzeichnet, dass**
die Verfestigungselemente (1), bruchgefährdende Bildung von Randbereichen ausschließend und durch Verwurzelung ihre Wirkung auf Randbereiche der Bodenmassen (2) übertragend und somit mit ihrer Wurzelbildung in umliegende Bodenmassen (2) eingreifend, eingeordnet werden.

2. Verfahren nach Anspruch 1,
**dadurch gekennzeichnet, dass**
die Einordnung der Verfestigungselemente (1) entsprechend den vorliegenden Bodenwerten auf der Grundlage von errechneten Parametern erfolgt.

3. Verfahren nach einem der vorhergehenden Ansprüche,
**dadurch gekennzeichnet, dass**
die Verfestigungselemente im Zentrum ihres Einbringungsgebietes in Tiefen reichend eingebracht werden, die tiefer sind als die Einbringungstiefen an den Randzonen des Einbringungsgebietes, und vom Zentrum ausgehend zu den Randzonen hin gerichtet in ihrer Tiefenerstreckung sich verändernd eingeordnet werden.

4. Verfahren nach Anspruch 3,
**dadurch gekennzeichnet, dass**
die Verfestigungselemente (1) im Zentrum ihres Einbringungsgebietes in größere Tiefen eingreifend als in der Randzone eingebracht und in vom Zentrum entfernten Positionen in ihrer Tiefenerstreckung verringert eingebracht werden.

5. Verfahren nach Anspruch 1 und 3,
**dadurch gekennzeichnet, dass**
die Verfestigungselemente (1) im Zentrum ihres Einbringungsgebietes in bestimmter Tiefe eingreifend eingebracht werden und vom Zentrum ausgehend zu den Randzonen gerichtet in größeren Tiefen als im Zentrum eingebracht werden.

6. Verfahren nach einem der Ansprüche 1 oder 2,
**dadurch gekennzeichnet, dass**
die Verfestigungselemente (1), ausgehend vom Zentrum ihres Einbringungsgebietes derart angeordnet werden, dass zu den Randbereichen hin ihre Tiefenerstreckungen wellenförmig verlaufen und **dadurch** die Anordnung von Sollbruchstellen bei Einhaltung einer darin vorliegenden, vorbestimmten Verfestigung erreicht wird.

7. Verfahren nach Anspruch 4,
**dadurch gekennzeichnet, dass**
die Verfestigungselemente (1) im Zentrum ihres Einbringungsgebietes mit horizontal geringerem Rasterabstand als in den vom Zentrum ihres Einbringungsgebietes entfernten Bereichen eingearbeitet werden.

8. Verfahren nach Anspruch 4,
**dadurch gekennzeichnet, dass**
die Verfestigungselemente (1) im Zentrum ihres Einbringungsgebietes mit horizontal größerem Rasterabstand als in den vom Zentrum ihres Einbringungsgebietes entfernten Bereichen eingearbeitet werden.

9. Verfahren nach wenigstens einem der vorhergehenden Ansprüche,
**dadurch gekennzeichnet, dass**
bei geringer Hangneigung (3), insbesondere in geschüttete Dämme und Wälle, die Verfestigungselemente (1) in im Wesentlichen waagerechter Lage während des Baufortschrittes eingearbeitet werden.

10. Verfahren nach wenigstens einem der vorhergehenden Ansprüche,
**dadurch gekennzeichnet, dass** die Verfestigungselemente (1) mittels Einspülen in die Bodenmasse (2) eingebracht werden.

11. Verfahren nach wenigstens einem der Ansprüche 1 bis 9,
**dadurch gekennzeichnet, dass**
die Verfestigungselemente (1) in Bohrlöcher eingebracht werden.

12. Anordnung zur Erhöhung der Lagesicherheit von Bodenmassen, die geschüttet oder natürlich anstehend, durch Einführung von Verfestigungselementen an einer Lageveränderung gehindert sind und vegetative Verfestigungselemente aufweisen,
**dadurch gekennzeichnet, dass**
die Verfestigungselemente (1) entsprechend von auf der Grundlage vorliegender Bodenwerte errechneter Parameter hinsichtlich ihrer Tiefenerstreckungen sowie horizontalen Einbauabständen (6) in die Bodenmassen (2) eingebracht sind, wodurch die lagegesicherten Bodenmassen (2) keinen Monolithen ausbilden.

13. Anordnung nach Anspruch 12,
**dadurch gekennzeichnet, dass**
die Verfestigungselemente (1) bei einer vertikalen oder annähernd vertikalen Einbaulage (4) in Bezug zu in einer selben Reihe angeordneten Verfestigungselementen (1) derartige unterschiedliche Einbautiefen (7) aufweisen, dass sich in der Reihe ein wellenförmiger Verlauf der Einbautiefen (7) ergibt, wobei die Verfestigungselemente (1) einen jeweils unterschiedlichen Einbauabstand (6) zueinander aufweisen.

14. Anordnung nach einem der Ansprüche 12 oder 13,
**dadurch gekennzeichnet, dass**
die Verfestigungselemente (1) in horizontal und vertikal unterschiedlichen Einbauabständen beziehungsweise Einbautiefen (6, 7) derart angeordnet sind, dass Sollbruchstellen in den Bodenmassen (2) eingeordnet sind.

15. Verfahren zur Herstellung eines geschüttete oder natürlich anstehende Bodenmassen (2) umfassenden Hanges oder Walles, mittels des erfindungsgemäßen Verfahrens zur Erhöhung der Lagesicherheit von Bodenmassen (2) nach den Ansprüchen 1 bis 11.
